# EUROPEAN PATENT APPLICATION

(11) **EP 1 369 777 A2**
(43) Date of publication of application: **10.12.2003**
(21) Application number: 03010320.4
(22) Date of filing: 07.05.2003
(51) Int. Cl.: G06F 9/44, G06F 9/45

(54) **Software development system, simulator, and recording medium**

(30) Priority: 03.06.2002 JP 2002161486
(71) Applicant: MATSUSHITA ELECTRIC INDUSTRIAL CO., LTD., Kadoma-shi, Osaka 571-8501 (JP)
(72) Inventor: Kondo, Takahiro, Fukuoka-shi, Fukuoka-ken, 812-0041 (JP); Nakamura, Tsuyoshi, Kasuya-Gun, Fukuoka-Ken, 811-2413 (JP); Taruki, Maiko, Kitakyusyu-Shi, Fukuoka-Ken, 802-0064 (JP)
(74) Representative: Pautex Schneider, Nicole

(57) **Abstract**

A source code is entirely described in a high-level language. The source code includes a library description and a versatile description other than the library description to correspond to a target processor-adapted assembler code. The library description is made up of functions defined in high-level language. In order to produce target processor-adapted software, a dedicated translator (403) transforms the library description into, one by one, an assembler code, while a compiler (404) compiles the versatile description. A simulator includes a compiler (906) that is operable to compile the library description with reference to a library.

## Description

The present invention relates to a software development system designed for development of target processor-adapted, built-in software, and an art related thereto.

In general, a software development system run on a host processor is used to develop target processor-adapted, built-in software. The host processor is incompatible with a target processor.

The term "host processor" as set forth herein actuates the software development system. The host processor is used for software development and the verification of the resulting software.

The term "target processor " as given herein differs from the host processor. The target processor is used to execute development results or rather the resulting software.

The host processor is incompatible in software with the target processor. The resulting software normally runs only on the target processor, not on the host processor.

The term "simulator" as set forth herein creates resulting software-like, simulated software that is executed on the host processor, not on the target processor.

As described above, the software designed for the target processor that differs from the host processor is developed using the host processor-adapted software development system.

However, such software development involves problems as discussed below.

A recent trend of the above-discussed software development has been changed, with an increase in scale of software, from assembler language-driven development to high-level language-driven development (e.g., C/C++).

This is because the software development using high-level languages allows processing such as data retention, transfer, and computation to be described independently of target processor assembler instructions and resources such as a register and a memory. This means that the high-level language-led software development is superior in readability, versatility, and development efficiency.

In particular, built-in software must be optimized to maximize processor capability in order to provide utmost system performance.

However, the high-level language-based software development has a compiler performance problem that generates a redundant code upon transformation from any high-level language into an assembler code. This problem may adversely affect software code size and execution speed.

In order to smooth out the problem, software development associated with heavy load-involving processing such as signal processing is still now made using a target processor-adapted assembler language in addition to the high-level language-based software development.

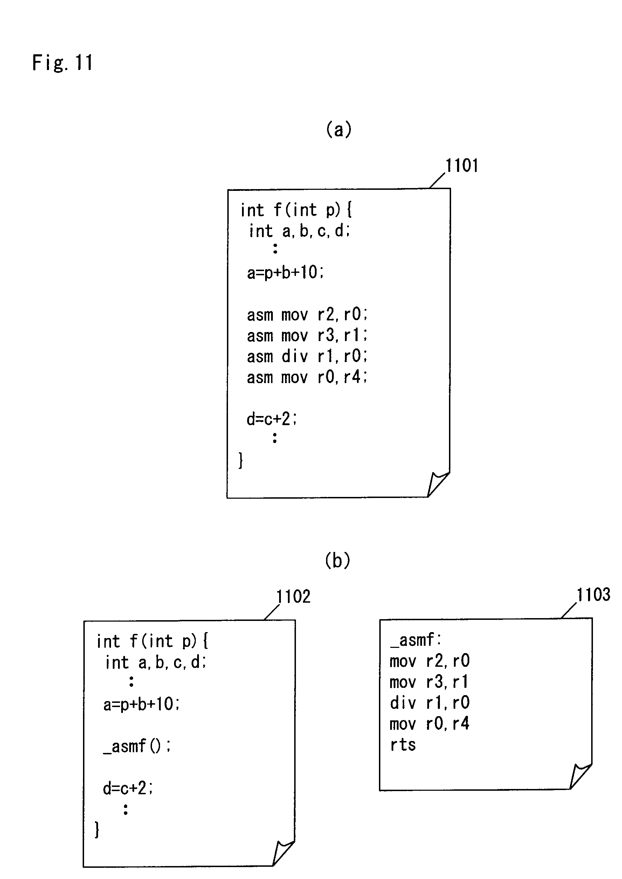

As a result, software developers use "asm" statements, a mixture of the high-level language and the assembler language, as illustrated in Fig. 11 (a) that contains an example of source code 1101. A large number of compilers support the asm statements. Alternatively, as illustrated in Fig. 11 (b), the software developers describe part of a program (e.g. a function) using only assemblers, as illustrated by an example of assembler 1103, in addition to an example of high-level language-based source code 1102.

The resulting source code is translated into the assembler code using a compiler. At this time, the compiler interprets the "asm" statements and the assembler-described statements. For the assembler-described statements, the compiler outputs the assembler code as such.

The assembler code is transformed into an object code executable on the target processor. As previously discussed, the object code is actuated only on the target processor, not on the host processor.

In order to advance the software development, the resulting software must be verified to determine whether or not the software meets required specifications. It would be an easy job to practice such verification if the resulting software, i.e. software designed for the target processor, is operable on the host processor; however, it is actually impossible to realize, as already discussed. Therefore, another verification method must be practiced.

The prior art primarily practices two different verification methods, i.e., verification No. 1 and No. 2. According to verification No. 1, the resulting software is permitted to run on the target processor in practice. According to verification No. 2, the simulator run on the host processor is used to simulate how the target processor is operated.

In order to practice verification No. 1, evaluation boards having the target processor physically implemented therein must be provided. The evaluation boards are equivalent in number to the software developers. This is virtually difficult to practice in view of cost. In addition, verification No. 1 is totally impossible to execute the verification without the evaluation boards.

Verification No. 2 has a disadvantage in which the simulator run on the host processor provides simulation at low speed.

This is because an only available prior art simulator is of an interpreter type that involves several steps of: placing execution software into a memory; reading out the software from the memory for each of instructions upon software execution; decoding the instructions; and executing the software.

In view of the above, an object of the present invention is to provide an improved art that eliminates evaluation boards, and further that practices higher speed verification than the prior art does verification.

More specifically, an aspect of the present invention provides a software development system designed to meet the above object, and to create a target processor-adapted assembler code. Another aspect of the present invention provides a compiler type simulator suited to meet the above object, and to produce an object code operated on a host processor.

A first aspect of the present invention provides a software development system operable to read a source code described in high-level language, and to create a target processor-adapted assembler code, the software development system comprising: a compiler run on a host processor that differs from a target processor, wherein the source code includes a library description and a versatile description other than the library description to correspond to the target processor-adapted assembler code, the library description being made with the use of a function or procedure defined using the high-level language, the versatile description being made by the high-level language.

This construction allows the same source code to be shared by the software development system and a simulator. In addition, the source code fully described in high-level language provides development that is improved in implantation and readability.

A second aspect of the present invention provides a software development system as defined in the first aspect of the present invention, wherein a dedicated translator transforms the library description into, one by one, a target processor-adapted, first assembler code, and the compiler compiles the versatile description, thereby creating a target processor-adapted, second assembler code.

This construction allows assembler code optimization in the library description to be reflected, as such, in the created assembler code.

A third aspect of the present invention provides a software development system as defined in the second aspect of the present invention, wherein the source code includes variable allocation-related information, and wherein the compiler creates the target processor-adapted assembler code in which the variable allocation-related information is reflected.

This construction allows the assembler code to specify how variables are allocated.

A fourth aspect of the present invention provides a software development system as defined in the first aspect of the present invention, wherein the source code differentiates the library description from the versatile description using information that is interpreted as a comment by the compiler.

According to the above construction, the information interpreted as a comment by the compiler separates the library description from the versatile description. The compiler ignores such separating information. As a result, the source code used in the software development system may be shared with a compiler type simulator to simulate how the target processor is operated.

A fifth aspect of the present invention provides a software development system as defined in the first aspect of the present invention, wherein the source code has the library description sandwiched between a starting identifier and an ending identifier, thereby separating the library description from the versatile description, the starting and ending identifiers being described in such a manner as to be interpreted as comments by the compiler.

According to this construction, the library description is confined between the starting and ending identifiers. As a result, the library description and the versatile description can be distinctly differentiated from one another.

A sixth aspect of the present invention provides a software development system as defined in the third aspect of the present invention, wherein the variable allocation-related information is described in such a manner as to be interpreted as a comment by the compiler.

According to this construction, the variable allocation-related information is described in such a manner as to be interpreted as a comment by the compiler. The compiler ignores the variable allocation-related information. As a result, the source code used in the software development system may be shared with a compiler type simulator to simulate how the target processor is operated.

A seventh aspect of the present invention provides a software development system as defined in the first aspect of the present invention, wherein the source code contains compiler pseudo-instructions that are operable to include a library, the library defining a function or procedure used in the library description.

This construction ensures complete code commonality between the source code used in the software development system and that used for simulation. The compiler normally processes the source code that includes the compiler pseudo-instructions.

An eighth aspect of the present invention provides a simulator run on a host processor, the simulator being operable to read a source code described in high-level language, and to simulate how a target processor is operated according to the source code, the simulator comprising: a compiler operable to create an object code run on the host processor; and a library to be referenced by the compiler, the library including a definition of a function or procedure used in a library description, wherein the source code includes the library description and a versatile description other than the library description to correspond to a target processor-adapted assembler code, the library description being made with the use of a function or procedure defined using the high-level language, the versatile description being made by the high-level language, wherein the compiler compiles the versatile description to create a host processor-adapted, first assembler code, and compiles the library description with reference to the library, thereby creating a host processor-adapted, second assembler code, and wherein the simulator transforms the created first and second assembler codes into an object code executable on the host processor.

This construction realizes a compiler type simulator. In addition, the source code may be the same as one used in the software development system. The compiler type simulator provides a very higher speed object code, when compared with a prior art interpreter type simulator. This feature provides operative verification.

A ninth aspect of the present invention provides a simulator as defined in the eighth aspect of the present invention, wherein the library description includes variable allocation-related information, and wherein a connection between the library description and the versatile description is generated in accordance with the variable allocation-related information, thereby adding the generated connection to the object code.

This construction creates the object code having variable consistency.

A tenth aspect of the present invention provides a simulator as defined in the eighth aspect of the present invention, wherein the library includes a target processor interrupt capability that is controllable to be switched on and off during simulation on the host processor.

According to this construction, the simulator provides simulation using the interrupt capability when the simulation needs the interrupt capability, but provides high-speed simulation when the simulation does not need the interrupt capability.

An eleventh aspect of the present invention provides a simulator as defined in the eighth aspect of the present invention, wherein the library includes a target processor execution cycle number-counting capability that is possible to measure the number of target processor cycles during simulation on the host processor.

This construction makes it possible to reference the number of execution cycles of target processor assembler instructions during simulation.

The above, and other objects, features and advantages of the present invention will become apparent from the following description read in conjunction with the accompanying drawings, in which like reference numerals designate the same elements.
Fig. 1 (a) is a block diagram illustrating an exemplary target processor according to a first embodiment;
Fig. 1 (b) is a descriptive illustration showing exemplary assembler instructions executable on the target processor, and capabilities of the assembler instructions;
Fig. 2 is an illustration showing an example in which an exemplary library to actuate the target processor of Fig. 1 is described in C-language;
Fig. 3 is an illustration showing an example of an exemplary source code according to the first embodiment;
Fig. 4 is a block diagram illustrating how an exemplary software development system according to the first embodiment is operated;
Fig. 5 is a block diagram illustrating how an exemplary simulator according to a second embodiment is operated;
Fig. 6 is a block diagram illustrating how an exemplary simulator according to a third embodiment is operated;
Fig. 7 is a block diagram illustrating an exemplary target processor according to the third embodiment;
Fig. 8 is an illustration showing an example of an exemplary library of Fig. 6, which is described in C-language;
Fig. 9 is an illustration showing details of the interior of an exemplary assembler code-transforming unit of Fig. 6;
Fig. 10 is a flowchart illustrating how an exemplary data connection code-generating unit is operated;
Fig. 11 (a) is an illustration showing an example of a prior art source code; and
Fig. 11 (b) is an illustration showing examples of a prior art source code and a prior art assembler code.

Embodiments of the present invention will be discussed with reference to the drawings. The embodiments discuss a C-language as a high-level language, but may alternatively employ any other high-level language such as Pascal.

### (First embodiment)

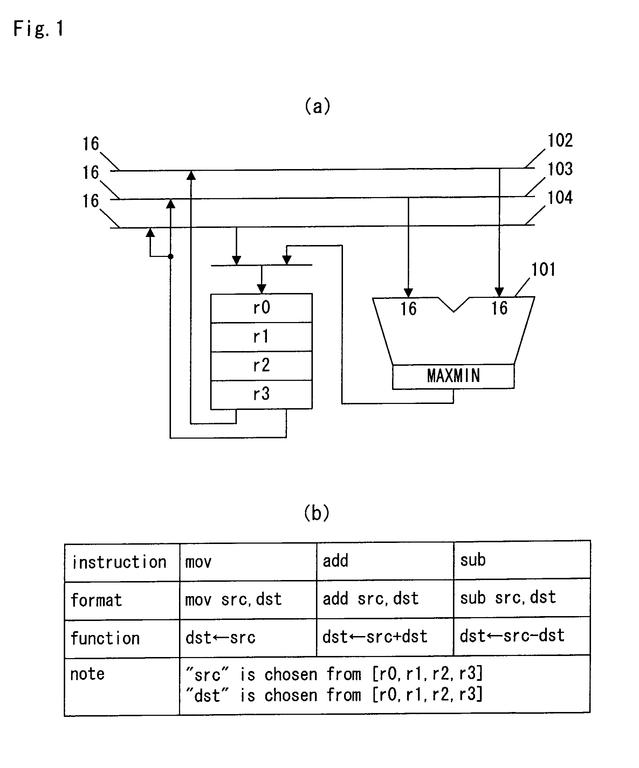

A first embodiment of the present invention is now described with reference to Fig. 1 to Fig. 4. The present embodiment discusses a software development system.

Fig. 1 (a) is a block diagram illustrating an exemplary target processor according to the present embodiment.

As illustrated in Fig. 1 (a), the target processor includes 16-bit, four registers r0, r1, r2, r3 and an adder-subtracter 101. The registers r0, r1, r2, and r3 act as resources, while the adder-subtracter 101 works as a calculator. Two pieces of coded 16-bit data enters the adder-subtracter 101 for addition and subtraction. The resulting coded 16-bit data, i.e., results of the addition and subtraction, leaves the adder-subtracter 101.

The adder-subtracter 101 is provided with a MAXMIN capability. This function sets a calculation result to a coded 16-bit maximum value (0x7FFF) when the calculation result exceeds the coded 16-bit maximum value (0x7FFF), while clipping the calculation result to a coded 16-bit minimum value (0x8000) when the calculation result is smaller than the coded 16-bit minimum value (0x8000).

The present embodiment assumes DSP as a target processor, and the target processor is presupposed to have the MAXMIN capability that is commonly provided in DSP. However, the target processor according to the present embodiment is not limited to that having the MAXMIN capability.

The adder-subtracter 101 and the four registers, r0 to r3, are connected together through buses 102, 103, and 104. Any two of the four registers are used as input registers that work with the adder-subtracter 101. Any one of the remaining registers is used as an output register that contains calculation results from the adder-subtracter 101. Assembler instructions as described later specifies which register is used as the input or output register.

Fig. 1 (b) is a descriptive illustration showing a set of exemplary assembler instructions executable on the target processor and the capabilities of the assembler instructions.

As illustrated in Fig. 1 (b), the target processor responds with "mov-instructions", "add-instructions", and "sub-instructions". Appropriately changed instructions that actuate the target processor are, of course, encompassed by the present invention.

Descriptive formats and capabilities of the above instructions are now discussed. The "mov-instructions" for transfer is described as "mov src, dst". The "src" and "dst" are selected from the four registers, r0 to r3. Accordingly, the "mov-instructions" can be given as, e.g., "mov r0, r1". Such instructions allow data in register r0 to be transferred to register r1.

The "add-instructions" for addition is described as "add src, dst". Similarly to the "mov-instructions", the src and "dst" are selected from the four registers, r0 to r3. Accordingly, instructions described as, e.g., "add r0, r1" adds data in register r0 to data in register r1. The added data is placed into register r1.

The "sub-instructions" for subtraction is described as "sub src, dst". Similarly to the "mov-instructions" and "add-instructions", the src and "dst" are selected from the four registers, r0 to r3. Accordingly, instructions described as, e.g., "sub r0, r1" subtracts data in register r1 from data in register r0. The subtracted data is placed into register r1.

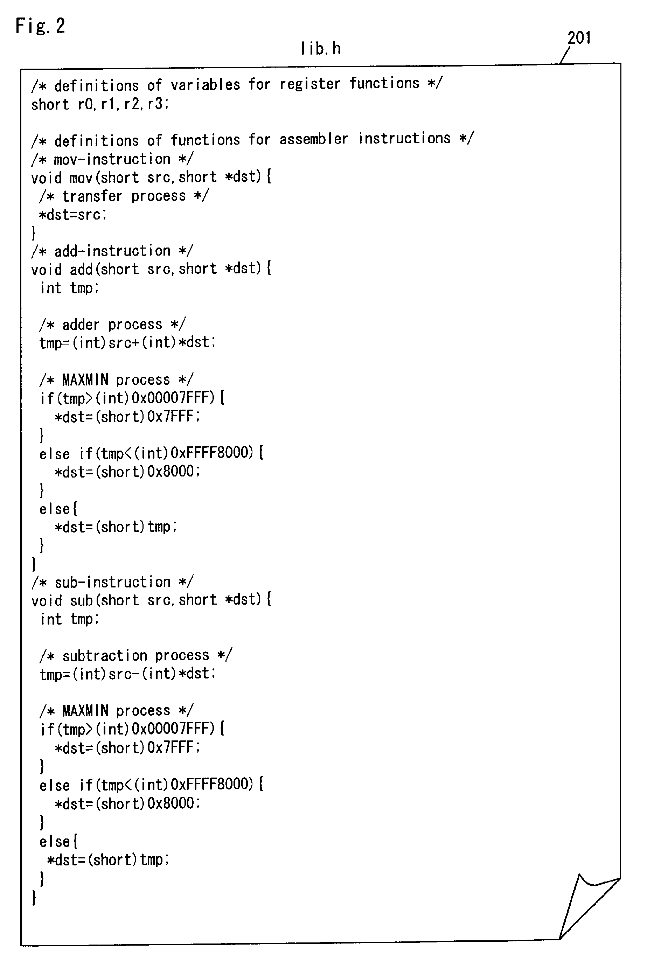

Fig. 2 is an illustration showing an example in which an exemplary library designed for the target processor of Fig. 1 is described in C-language. According to the present embodiment, the library consists of a file having a filename "lib.h". Alternatively, the library may be divided into several files before being described using the C-language.

As illustrated in Fig. 2, the library according to the present embodiment includes a definition of variables (r0, r1, r2, r4) and definitions of C-language functions (mov-function, add-function, and sub-function). The variables (r0, r1, r2, r4) exercise the capabilities of target processor resources, i.e., the four registers (r0, r1, r2, r3). The C-language functions (mov-function, add-function, and sub-function) exercise the capabilities of the assembler instructions (mov-instructions, add instructions, and sub-instructions) that actuate the target processor.

Each of the target processor registers (r0 to r3) is 16-bits. In the library, the variables (r0 to r3) for these registers are declared as 16-bit data type "short". In the library, the other calculation accuracies are described so as to be suited for the target processor.

In the library, the C-language functions (mov-function, add-function, and sub-function) are associated, one by one, with the assembler instructions (move-instructions, add-instructions, and sub-instructions). Arguments in the C-language functions are preferably matched in content and sequence with arguments in the assembler instructions.

The C-language functions are read out in a state of the registers (variable r0 to r3) for use in calculation being specified as arguments. The C-language functions perform various calculations of data contained in the specified registers, and then sets calculation results into the variables. Thereafter, the C-language functions are returned to an original address.

In the target processor, the mov-function, which exercises a capability of move-instructions, i.e., instructions to transfer data between the registers, transfers variable src to variable *dst.

The add-function, which exercises a capability of add-instructions, i.e., addition instructions, performs adding and MAXMIN processing of variables src,*dst, and then places such processing results into variable*dst.

The sub-function, which exercises a capability of sub-instructions, i.e., subtraction instructions, is operated in a manner similar to the add-function.

In light of C-language specifications, processing having no return value (void type) is customarily called a "function", not a "procedure". Accordingly, the library of Fig. 2 is made up of the variable and function definitions.

However, another high-level language such as Pascal stringently distinguishes a procedure having no return value from a function having a return value. The term "high-level language" as set forth herein includes high-level languages (e.g., Pascal) other than the C-language. Accordingly, in the library as described herein, assembler code processing is in general "defined using any high-level language according to a function or procedure".

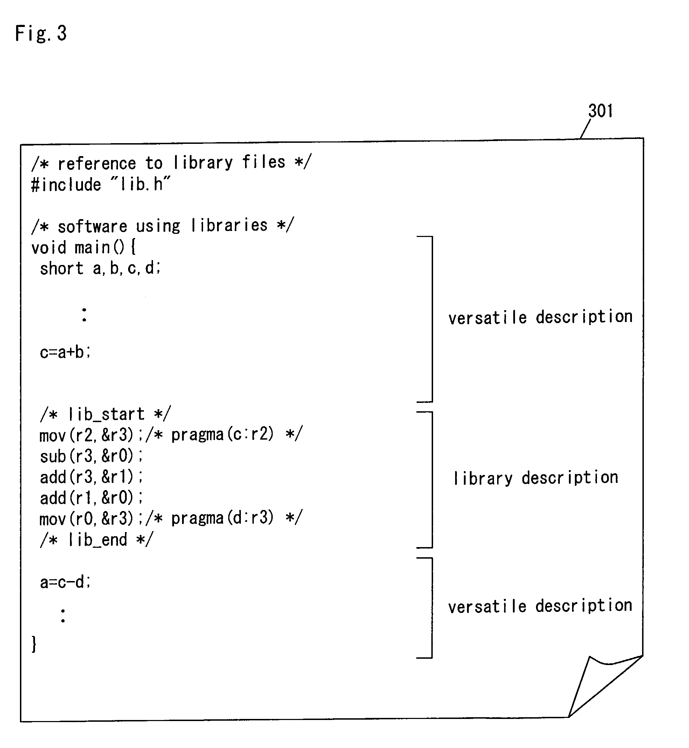

Fig. 3 is an illustration showing an example of an exemplary source code according to the present embodiment. In order to correspond to a target processor-adapted assembler code, the source code includes a "library description" and a "versatile description". The "library description" refers to statements made using the functions or procedures that are defined by a high-level language. The "versatile description" refers to statements other than the library description.

As illustrated in Fig. 3, a library file ("lib.h") is included at the top of the source code 301.

The library description contains a program described using variables and functions that are defined in the above library.

In Fig. 3, "/*lib_start */" and "/ lib_end */" are a starting identifier of the library description and an ending identifier thereof, respectively.

Pursuant to the present embodiment, the library description is sandwiched between the starting and ending identifiers, thereby distinctly differentiating the library description from the versatile description.

The starting and ending identifiers are interpreted as comments by a C-language compiler. The library description contains no mark such as "asm-statements".

When the source code 301 is passed to the C-language compiler, then the C-language compiler interprets the library description as well as the versatile description as being described in C-language except for the asm-statements.

More specifically, the compiler processes a line of "mov (r2, &r3);" as a C-language function, and allows the definition of the mov-function in library file "lib.h" included at the top of the source code 301 to be applied to the above line.

When the entire source code 301 is passed, as such, to the compiler, then the compiler interprets "mov-", "sub-", and "add" as C-language functions having identifiers of "mov-", "sub-", and "add". As a result, the entire source code 301 is normally compiled.

However, such processing is practiced using a compiler type simulator according to a second embodiment as described later. In the software development system according to the present embodiment, pre-processing as described later is practiced to avoid passing the library description to the compiler.

The keywords "/* pragma (c:r2) */" and "/ pragma (d:r3) */" instruct the compiler as described later to allocate variables "c" and "d" to the target processor registers r2 and r3, respectively.

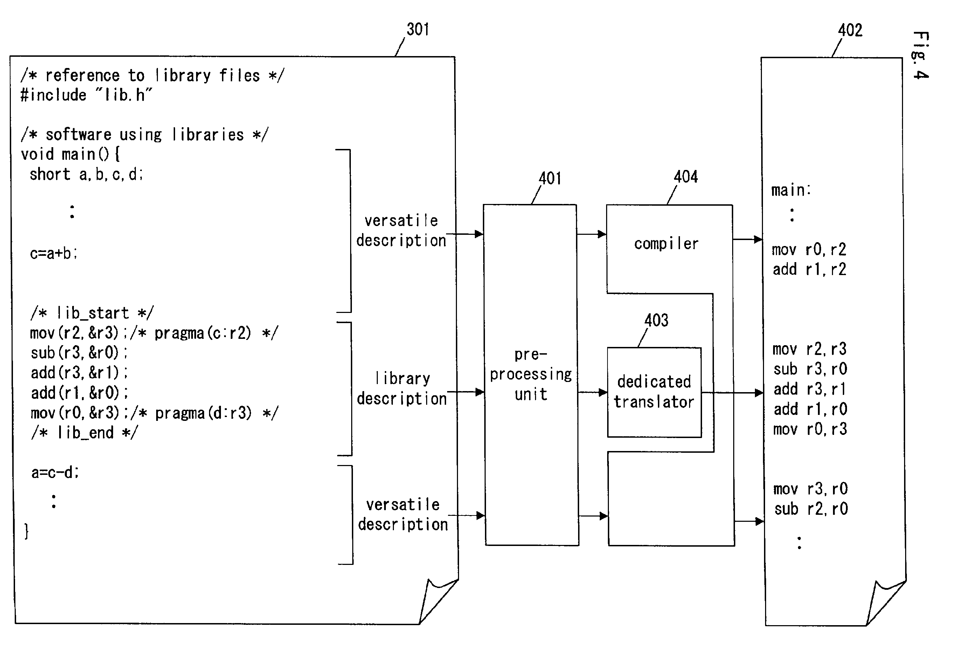

Fig. 4 is a block diagram illustrating how the software development system according to the present embodiment is functioned.

In Fig. 4, a pre-processing unit 401 compiles the source code 301 to separate the library description between the starting identifier "/* lib_start */" and the ending identifier "/* lib_end */" from the versatile descriptions before a compilier 404 processes the source code 301.

The pre-processing unit 401 passes the versatile descriptions and the library description in sequence from the top of the source code 301 to the compiler 404 and a dedicated translator 403, respectively. The compiler 404 in receipt of the versatile descriptions creates assembler codes. The dedicated translator 403 in receipt of the library description creates different assembler codes without allowing the compiler 404 to process the library description. As a result, an assembler code list 402 is provided.

The dedicated translator 403 transforms source codes such as "mov (r2, &r3);" into, one by one, target processor-adapted assembler codes. (For example, a "function of "mov (r2, r3)" → "instructions of mov r2, r3", and a "function of sub (r3, r0)" → "instructions of sub r3, r0").

Instructions to allocate the variables to the registers according to "/*pragma (c:r2) */" and "/pragma (d:r3) */" are also reflected in the assembler code.

The dedicated translator 403 is easily functioned using a text-based, simple substitute table.

Compiler pseudo-instructions that include the "lib.h" file are described at the top of the source code 301. The library description is not passed to the compiler 404. Accordingly, the definitions of the functions in the library are not applied. As a result, the compiler 404 practices normal processing.

The above features (the source code 301 contains the compiler pseudo-instructions at the top thereof, and the compiler 404 receives no library description) allow a simulator as described later to process the source code 301 without any change therein.

The library description-separating keywords and the variable-to-register allocation instructions are not limited to those as illustrated in the drawings. For example, the use of an identifier "/* lib_x_y */" makes it feasible to show that the library description extends between lines X and Y. Alternatively, the library description may contain the library description-separating keywords and variable-to-register allocation instructions in a non-comment manner if the compiler is possible to cope therewith.

The transformation from the C-language to the assembler code using the compiler 404 and details other than the variable-to-register allocation are omitted to discuss because these are unrelated to the subject matter of the present invention. The present embodiment is also practicable using a source code that entirely consists of the library description without the versatile description.

As described above, pursuant to the software development system according to the present embodiment, assuming that software developed using a library is translated to create an assembler code, the dedicated translator 403 transforms the library description into, one by one, corresponding assembler instructions, while the compiler 404 transforms the versatile descriptions into assembler codes that practice C-language-described processing. As a result, assembler code optimization using the library can be reflected, as such, in the created assembler code.

The software development system as illustrated in Fig. 4 may, of course, additionally be provided with a function of transforming the assembler code into an object code.

### (Second embodiment)

The present embodiment discusses a simulator that reads a target processor-adapted source code (identical to the source code 301 according to the previous embodiment), and that creates an object code run on a host processor. Descriptions similar to those according to the previous embodiment are omitted to avoid repeated descriptions.

Fig. 5 is a block diagram illustrating how the exemplary simulator according to the present embodiment is functioned. In Fig. 5, a compiler 906 is a C-language compiler designed for the host processor. The compiler 906 creates an assembler code 502. An object code-transforming unit 503 transforms the assembler code 502 into an object code 504.

The compiler 906 and object code-transforming unit 503 may simply be designed for the host processor, and need not be specially fabricated.

However, a source code 301 and a library 201 ("lib.h") must be identical to those described in the previous embodiment.

The source code 301 may eliminate notations such as "/* lib_start */" and "/* pragma (c:r2) */". However, the simulator and the software development system preferably share the same source code. Therefore, it is advisable that the source code 301 includes such notations.

Compiler pseudo-instructions that include "lib.h" at the top of the source code 301 must be retained because the removal of the compiler pseudo-instructions precludes the compiler 906 from referencing the library 201.

A feature of the present embodiment is that a compiler type simulator is realized, and that target processor-adapted software can be simulated using only the host processor.

Another feature of the present embodiment is that the compiler type simulator creates software executed on the host processor at very higher speeds, when compared with software created using an interpreter type simulator. In other words, the compiler type simulator provides software close in execution speed to actual target processor-adapted software. This feature provides more operative verification.

A further feature of the present embodiment is that the simulator according to the present embodiment includes a library operable to exercise a target processor assembler instruction capability using any high-level language such as the C-language. As a result, all software including assembler code optimization (such as code size reduction and high-speed execution time) can be developed using any high-level language such as the C-language.

According to the prior art, when software developed using any assembler language is implanted in another processor, statements in assembler language must be modified to be suited for such a grafting processor. Pursuant to the present embodiment, the software can be implanted, without any change therein, into a C-language compiler-adapted processor. This feature provides enhanced software versatility.

### (Third embodiment)

A third embodiment of the present invention is now described with reference to Figs. 5 to 10. The present embodiment provides additional descriptions on an interrupt capacity and an execution cycle number-counting capacity.

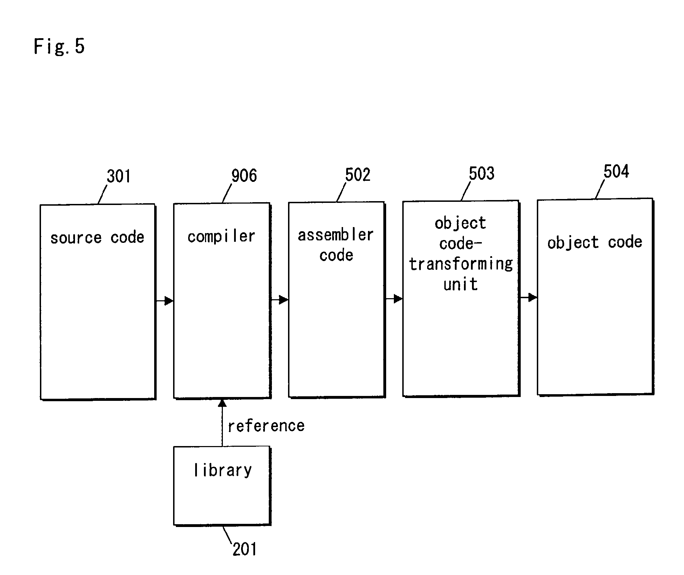

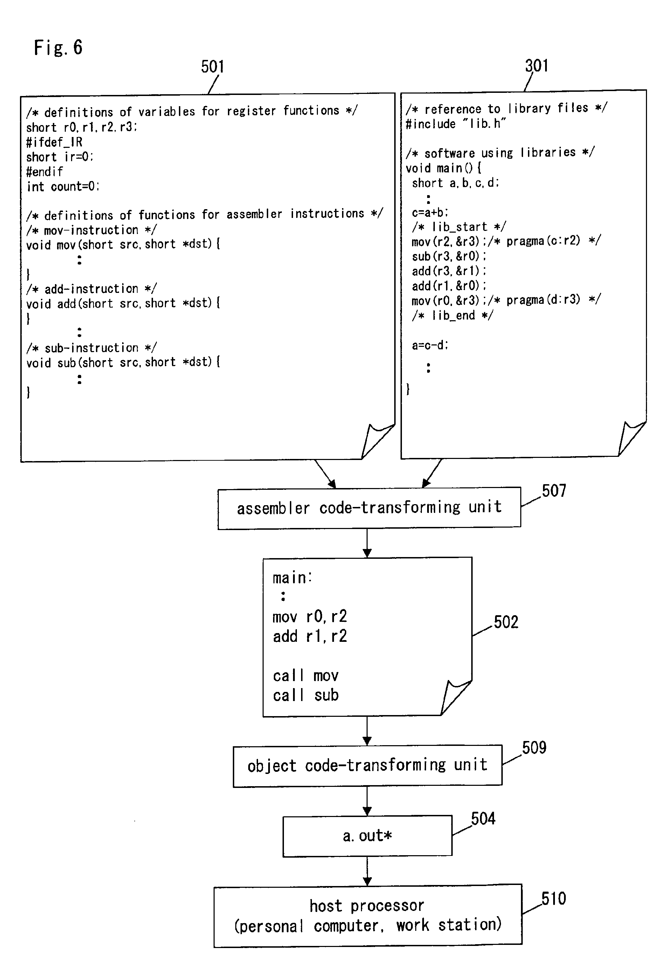

Fig. 6 is a block diagram illustrating how an exemplary simulator according to the present embodiment is functioned.

The simulator is now discussed briefly. A library 501 includes a gang of functions having a target processor assembler instruction capacity defined using a C-language.

A target processor-adapted source code 301 includes a library description and the remaining versatile description. The library description is described using the functions defined in the library 501.

An assembler code-transforming unit 507 includes a C-language compiler. The C-language compiler compiles the library description and versatile description, thereby creating an assembler code 502 that is run on a host processor.

An object code-transforming unit 509 transforms the resulting assembler code 502 into an object code, thereby providing the object code (a.out*) 504 that is executable on the host processor. The object code 504 is run on the host processor.

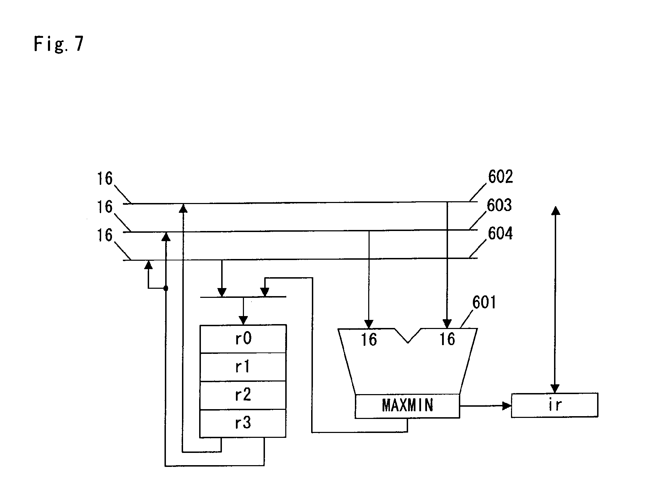

The following specifically discusses a structure of a target processor according to the present embodiment with reference to Fig. 7. Fig. 7 is a block diagram illustrating the exemplary target processor according to the present embodiment.

The target processor according to the present embodiment is basically similar in structure to that of Fig. 1 (a) according to the first embodiment, but is different therefrom in that a 16-bit register "ir" is added to the target processor according to the present embodiment.

The register ir usually has a value of zero, but is set to be 1 when an adder-subtracter 601 provides calculation results that are greater than a coded 16-bit data maximum value (0x7FFF) or smaller than a coded 16-bit data minimum value (0x8000).

When the register ir is set to be 1, then an interrupt occurs in an executing program. The register ir is reset to be zero.

After the interrupt occurs, control is shifted to an interrupt-processing function. The interrupt-processing function is named as "irs 0" according to the present embodiment.

When the processing of the interrupt-processing function is completed, then the original program, which was being executed before the interrupt occurs, is resumed to continue processing.

Details of target processor hardware sequence during the occurrence of the interrupt are herein omitted to discuss because such details are unrelated to the subject matter of the present invention.

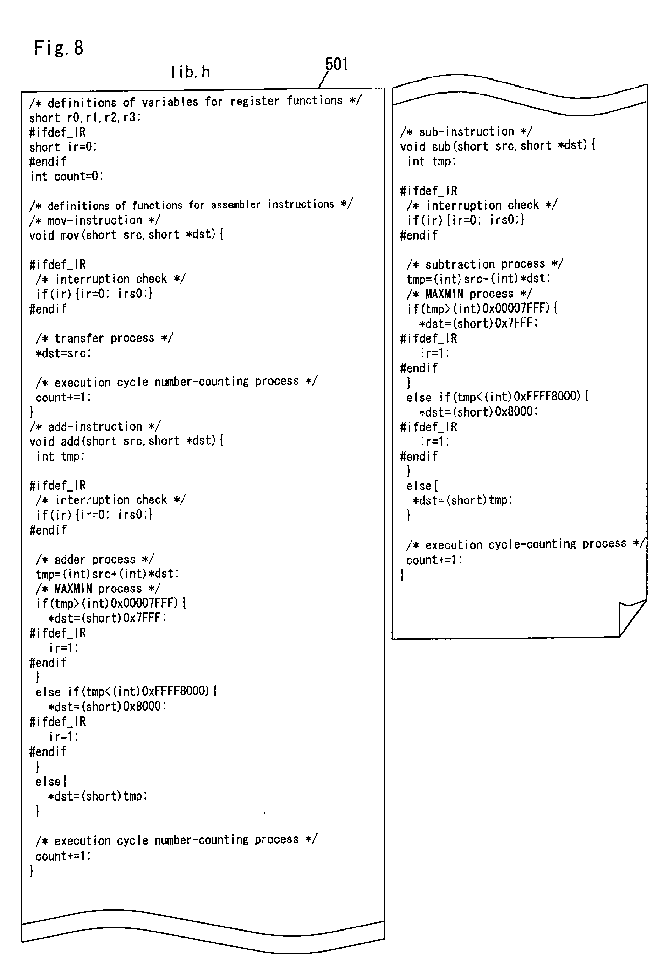

Fig. 8 is an illustrating showing an example in which the library of Fig. 6 is fully described using the C-language.

The library of Fig. 8 is basically similar to that of Fig. 2 according to the first embodiment, but is different therefrom in that an interrupt capability and a software execution cycle number-counting capability are added to the library of Fig. 8. The target processor is provided with these two different capabilities. The library has a filename of "lib.h".

In order to exercise the interrupt capability, the library contains variable "ir"-related statements in a definition of variable "ir" (see "short ir=0;") and a gang of functions (mov-function, add-function, and sub-function). The variable "ir" exercises a capacity of 16-bit register "ir". The gang of functions (mov-function, add-function, and sub-function) exercises capabilities of assembler instructions (mov-instructions, add-instructions, and sub-instructions).

Each of the above functions (mov-function, add-function, and sub-function) includes a notation of "if (ir) {} at the top thereof. The notation "if (ir) {}" has a capability of resetting a value of variable ir to zero when variable ir has a value other than zero, with the result that the interrupt-processing function (irs0) is called.

Each of the add-and sub-functions has a capability of setting variable ir to 1 (see "ir=1") when calculation results are greater than the coded 16-bit maximum value (0x7FFF) or smaller than the coded 16-bit minimum value (0x8000).

The library includes conditional compiler pseudo-instructions "#ifdef_IR" and "#endif', which are selectable to determine whether or not interrupt capability-related processing is executed. Such a selection can be made at the time of compiling as discussed later.

With regard to the software execution cycle number-counting capability, the library includes a notation of "int count=0;", i.e., a definition of cycle number-counting variable "count" (zero as an initial value). Each of the functions (mov-function, add-function, and sub-function) has a variable "count"-incrementing capability, see "count+=1". A value of 1, which increments variable "count", is a processing cycle number when the assembler instructions (mov-instructions, add-instructions, and sub-instructions) to permit the functions to exercise capabilities thereof are executed on the target processor.

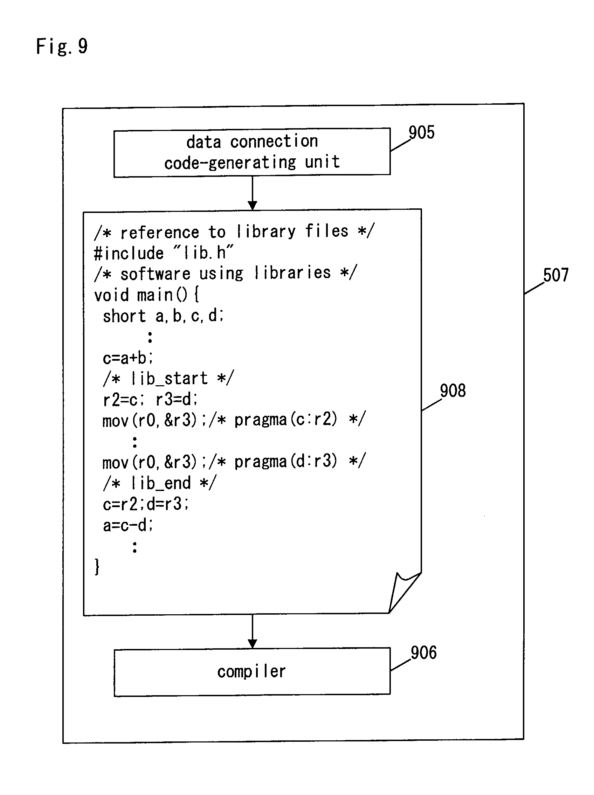

Fig. 9 is an illustration showing details of the interior of the assembler code-transforming unit of Fig. 6. As illustrated in Fig. 9, the assembler code-transforming unit 507 creates a connection code-inserted source code 908 using a data connection code-generating unit 905.

The connection code-inserted source code 908 according to the present embodiment is obtained by inserting connection codes such as "r2=c; r3=d;" into the source code 301 between the library description and versatile descriptions.

In the source code 301, the library description uses variables (r0 to r3) defined in the library 501, while the versatile description uses usual variables ("a" to "d").

In the first embodiment, assuming that the source code 908 is translated to be suited for the target processor, a dedicated translator allocates the variables (r0 to r3) to corresponding registers (r0 to r3), while a compiler automatically allocates the variable ("a" to "d") to the registers (r0 to r3).

At this time, in the first embodiment, the variables ("a" to "d") are specified to be allocated to the respective registers, in view of that the registers used in the library description are related to the variables ("a" to "d") used in the versatile descriptions, or more specifically in view of that each of the registers contains a value of a specific one of the variables. As a result, data consistency between the registers in the assembler code is provided. This feature makes it possible to execute intended processing.

Pursuant to the second embodiment, the compiler translates the connection code-inserted source code 908, not the source code 301.

The following discusses the insertion of the connection codes into the source code 301 using the data connection code-generating unit 905. In the simulator according to the present embodiment, assuming that a compiler 906 compiles the source code 301 as such, the variables (r0 to r3) used in the library description and the variables ("a" to "d") used in the versatile descriptions are objectionably handled as distinct variables. As a result, the data consistency is lost.

In order to obviate such an inconvenience, pursuant to the present embodiment, the data connection code-generating unit 905 permits the connection codes (such as r2=c; r3=d;) between the library description and the versatile descriptions to be inserted into the source code 301 in accordance with information in which the variables (r0 to r3) in the library description are related to the variables ("a" to "d") in the versatile description. As a result, the connection code-inserted source code 908 is provided. The compiler 906 compiles the resulting source code 908.

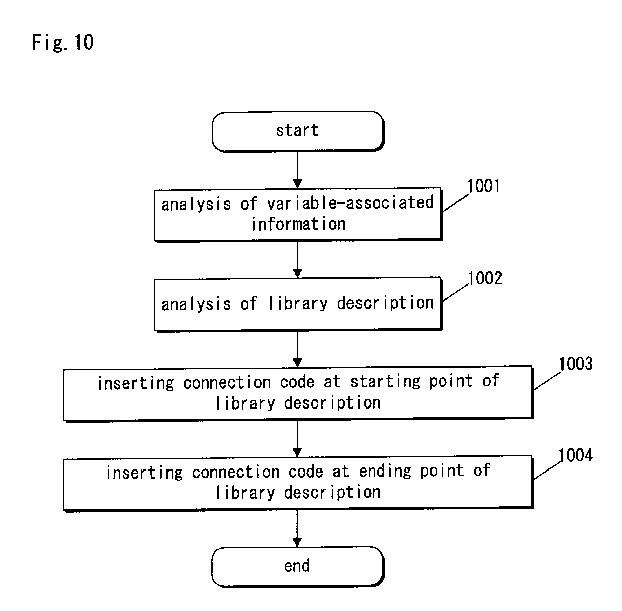

The following specifically describes how the data connection code-generating unit 905 is actuated. Fig. 10 is a flowchart illustrating how the exemplary data connection code-generating unit according to the present embodiment is operated.

At step 1001, the data connection code-generating unit 905 obtains, from the source code 301 that uses the library, information on how the variables (r0 to r3) in the library description are associated with the variables ("a" to "d") in the versatile description.

Referring back to Fig. 6, the source code 301 contains such variable-associated information as "/* pragma (c:r2) */" and "/* pragma (d:r3) */".

At step 1001, the source code is searched using a keyword of "pragma". The colon":"-separated parameters enclosed in parentheses "0" that follows the keyword "pragma" are taken as the variable-associated information.

In the source code 301 of Fig. 6, variable "c" is related to variable "r2", while variable "d" is associated with variable "r3". The variable-associated information is not limited to such an illustrated example.

At step 1002, the data connection code-generating unit 905 analyzes a location where the library description extends in the source code 301 that uses the library.

In the source code 301 of Fig. 6, the data connection code-generating unit 905 recognizes respective positions of starting and ending identifiers "/* lib_start */" and "/* lib_end */" as a starting point of the library description and an ending point thereof, respectively.

More specifically, at step 1002, the data connection code-generating unit 905 searches the source code 301 using the keywords of "lib_start" and "lib_end", thereby analyzing a position of the library description between the starting and ending points thereof.

At step 1003, the data connection code-generating unit 905 inserts a connection code into the source code 301 at the starting point of the library description in accordance with the variable-associated information obtained at step 1001.

The inserted connection code is designed to transfer data of the variables ("a" to "d") in the versatile description to the variable-associated information-specified variables (r0 to r3) in the library description. Referring back to Fig. 9, variable "c" is associated with variable "r2", while variable "d" is related to variable "r3". As a result, "r2=c;" and "r3=d;" are inserted.

At step 1004, the data connection code-generating unit 905 inserts a connection code into the source code 301 at the ending point of the library description in accordance with the variable-associated information.

The inserted connection code is designed to transfer data of the variables (r0 to r3) in the library description to the variable-associated information-specified variables ("a" to "d") in the versatile description. Referring to Fig. 9, "c=r2;" and "d=r3;" are inserted.

In this way, the data connection code-generating unit 905 inserts the connection codes into the source code 301, thereby providing the connection code-inserted source code 908.

As illustrated in Figs. 6 and 9, the compiler 906 translates the library 501 and source code 908, thereby generating a host processor-adapted assembler code 502. The object code-transforming unit 509 transforms the generated assembler code 502 into an executable object code 504.

The compiler according to the present embodiment may be a host processor-adapted, versatile compiler, and need not be specially constructed. For example, free software foundation C-compiler GCC for a personal computer and a workstation may be used.

Assuming that the source code is translated using the C-compiler (GCC) to create the assembler code, "-D_IR" may optionally be specified to include the interrupt capability. Conversely, when "-D_IR" is not specified, then the interrupt capability can be eliminated.

As illustrated in Fig. 6, the created object code (a.out*) 504 (see Fig. 5) is run on the host processor such as a personal computer or a workstation. A target processing capability (such as calculation and interrupt) and an execution cycle number-counting capability, as given in the library, are also executable on the host processor. As a result, software (including assembler level) developed for the target processor can be simulated.

The simulator according to the present embodiment is of a compiler type designed to compile before simulation, and eliminates the need to decode instructions during the simulation. As a result, the simulator according to the present embodiment provides higher-speed simulation, when compared with simulation run on a prior art interpreter type simulator.

As described above, pursuant to the present embodiment, all software including assembler code optimization (code size reduction and high-speed execution time) is developed using any high-level language such as the C-language. The developed software can be executed and compiled on the host processor. This feature provides higher-speed simulation, when compared with simulation using a prior art simulator.

Another feature of the present embodiment is that the variables (r0 to r3) used in the library description are associated with the variables ("a" to "d") used in the remaining statements. This feature provides data consistency between the library description and the versatile descriptions.

A further feature of the present embodiment is that a library contains a target processor interrupt capability, and that it is selectable whether or not the interrupt capability is used when the simulator executes simulation. This feature provides simulation with the use of the interrupt capability when the simulation needs the interrupt capability, and provides high-speed simulation without the use of the interrupt capability when the simulation does not need the interrupt capability.

A yet further feature of the present embodiment is that cycle number-counting variable "count" in the library is expressed using, e.g., a standard output function "printf' in the C-language when the simulation is terminated. This feature makes it feasible to reference the number of execution cycles of target processor assembler instructions during simulation.

The software development system according to the present invention allows assembler code optimization to be reflected, as such, in the resulting assembler code.

The simulator according to the present invention provides higher speed simulation than simulator using a prior art simulator does.

The simulator according to the present invention provides data consistency between the library description and the versatile description in a state in which the variables in the library description are associated with the variables in the versatile description.

The simulator according to the present invention provides the target processor interrupt capability, and provides different simulations, depending upon whether the interrupt capability is switched on and off. More specifically, the simulator executes simulation using the interrupt capability when the simulation needs the interrupt capability, while the simulator performs high-speed simulation when the simulation does not need the interrupt capability.

The simulator according to the present invention is able to reference the number of execution cycles of target processor assembler instructions during simulation.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A software development system operable to read a source code (301) described in high-level language, and to create a target processor-adapted assembler code, said software development system comprising:
a compiler (404) run on a host processor that differs from a target processor,
wherein the source code (301) includes a library description and a versatile description other than the library description to correspond to the target processor-adapted assembler code, the library description being made with the use of one of a function and a procedure, both of which are defined using the high-level language, the versatile description being made by the high-level language.

2. A software development system as defined in claim 1, wherein a dedicated translator (403) transforms the library description into, one by one, a target processor-adapted, first assembler code, and said compiler (404) compiles the versatile description, thereby creating a target processor-adapted, second assembler code.

3. A software development system as defined in claim 2, wherein the source code (301) includes variable allocation-related information, and wherein said compiler (404) creates the target processor-adapted assembler code in which the variable allocation-related information is reflected.

4. A software development system as defined in claim 1, wherein the source code (301) differentiates the library description from the versatile description using information that is interpreted as a comment by said compiler.

5. A software development system as defined in claim 1, wherein the source code (301) has the library description sandwiched between a starting identifier and an ending identifier, thereby separating the library description from the versatile description, the starting and ending identifiers being described in such a manner as to be interpreted as comments by said compiler (404).

6. A software development system as defined in claim 3, wherein the variable allocation-related information is described in such a manner as to be interpreted as a comment by said compiler (404).

7. A software development system as defined in claim 1, wherein the source code (301) contains compiler pseudo-instructions that are operable to include a library, the library defining one of a function and a procedure, both of which are used in the library description.

8. A recording medium in which a program to exercise said software development system as defined claim 1 is recorded.

9. A simulator run on a host processor, said simulator being operable to read a source code (301) described in high-level language, and to simulate how a target processor is operated according to the source code (301), said simulator comprising:
a compiler (906) operable to create an object code run on said host processor; and
a library to be referenced by said compiler (906), said library including a definition of one of a function and a procedure, both of which are used in a library description,
wherein the source code (301) includes the library description and a versatile description other than the library description to correspond to a target processor-adapted assembler code, the library description being made with the use of one of a function and a procedure, both of which are defined using the high-level language, the versatile description being made by the high-level language,
wherein said compiler (906) compiles the versatile description to create a host processor-adapted, first assembler code, and compiles the library description with reference to said library, thereby creating a host processor-adapted, second assembler code, and
wherein said simulator transforms the created first and second assembler codes into an object code (504) executable on said host processor.

10. A simulator as defined in claim 9, wherein the library description includes variable allocation-related information, and wherein a connection between the library description and the versatile description is generated in accordance with the variable allocation-related information, thereby adding the generated connection to the object code.

11. A simulator as defined in claim 9, wherein said library includes a target processor interrupt capability that is controllable to be switched on and off during simulation on said host processor.

12. A simulator as defined in claim 9, wherein said library includes a target processor execution cycle number-counting capability that is possible to measure the number of target processor cycles during simulation on said host processor.

13. A simulator as defined in claim 9, wherein the source code differentiates the library description from the versatile description using information that is interpreted as a comment by said compiler.

14. A simulator as defined in claim 9, wherein the source code has the library description sandwiched between a starting identifier and an ending identifier, thereby separating the library description from the versatile description, the starting and ending identifiers being described in such a manner as to be interpreted as comments by said compiler.

15. A simulator as defined in claim 10, wherein the variable allocation-related information is described in such a manner as to be interpreted as a comment by said compiler.

16. A simulator as defined in claim 9, wherein the source code contains compiler pseudo-instructions that are operable to include said library, said library defining one of a function and a procedure, both of which are used in the library description.

17. A recording medium in which a program to exercise said simulator as defined claim 9 is recorded.
